# EUROPEAN PATENT SPECIFICATION

(11) **EP 3 496 931 B1**
(45) Date of publication and mention of the grant of the patent: **12.01.2022**
(21) Application number: 17754306.3
(22) Date of filing: 08.08.2017
(51) Int. Cl.: B29C 49/00, C08L 23/06, C08L 77/00, B29K 77/00, B29K 23/00, B29L 23/00, B29L 31/30, B29K 509/10, B29K 105/26, C08K 5/098, C08K 5/14, C08L 77/02

(54) **METHOD FOR MANUFACTURING BLOW-MOLDED PARTS OF A MOTOR VEHICLE**
VERFAHREN ZUR HERSTELLUNG VON BLASGEFORMTEN TEILEN EINES KRAFTFAHRZEUGS
PROCÉDÉ DE FABRICATION DE PIÈCES MOULÉES PAR SOUFFLAGE D'UN VÉHICULE AUTOMOBILE

(30) Priority: 08.08.2016 EP 16183255
(43) Date of publication of application: 19.06.2019
(73) Proprietor: Plastic Omnium Advanced Innovation and Research, 1130 Bruxelles (BE)
(72) Inventor: DE KEYZER, Pierre, 1170 Watermael Boitsfort (BE)
(74) Representative: LLR
(86) International application number: PCT/EP2017/070122
(87) International publication number: WO 2018/029221

(56) References cited:
- WO-A1-2006/080712
- Apex Plastics: "Blow Molding Process", , 28 August 2014 (2014-08-28), XP002774938, Retrieved from the Internet: URL:http://www.apexplastics.com/blow-moldi ng-process [retrieved on 2017-10-23]

## Description

The present invention relates to a method for manufacturing a material composition for parts for motor vehicles. More specifically, the present invention relates to a material composition for fuel system parts, which has excellent fuel barrier properties and impact resistance properties and is suitably for fuel tanks and filler pipes. More particularly, the present invention relates also to grinded materials which are obtainable by said method.

Polyolefin, especially high-density polyethylene (HDPE) is widely used as a blow molding material particularly for automobile parts, because it provides molded articles with excellent mechanical properties.

Fuel system parts for motor vehicles are required to exhibit high safety performance, particularly with regard to fire resistance and impact resistance. Such parts are required to meet minimum statutory industry specified performance criteria in particular creep resistance in order to reduce tank deformation due to the fuel weight, leak tightness when the tank is subjected to a fire and crash test resistance when the tank is subjected to an impact. In addition, such hollow bodies have to meet sealing and permeability standards with respect to the use for which they are designed and the environmental requirements that they have to satisfy.

It is known that HDPE resin has high impact resistance, in particular at low temperature. However, such HDPE resin lacks a good barrier property, particularly for fuel containing alcohol. Consequently, environmental requirements are not fulfilled. A method for manufacturing a blow-molded part for a motor vehicle is described in WO2006/080712A1.

An object of the present invention is to solve this problem and provide a process for manufacturing blow-molded fuel system parts made of a material composition, which has excellent fuel barrier properties (to meet Euro 6D requirements) and impact resistance properties and is suitable for producing elements or devices for a fuel system or a SCR system of a vehicle.

Therefore one aspect of the present invention provides a method for manufacturing a blow-molded part for a motor vehicle according to claim 1.

The inventors have surprisingly found that when a polyolefin is mixed with a low amount of polyamide containing a layered clay combined with a compatibilizer, a material composition for motor vehicle parts having excellent fuel barrier properties and excellent impact resistance properties is obtained.

The barrier composition of the material composition of the invention comprises a polyamide, the content of which is from 40 to 90% by weight based upon the total weight of the barrier composition.

The term "blow molding" is understood to mean extrusion blow molding. This process can be performed as a continuous extrusion technique or as an accumulating extrusion technique. Preferably, the extrusion screw should not include mixing elements such as Dulmage, Maddock, Reverse or Pineapple. A full flight screw without any mixers is preferred. For screw diameter above 80 mm, the L/D ratio must be superior to 24 D (D: diameter, L: screw length).

According to a preferred embodiment the method according to the invention is such that it comprises the following additional steps:
- Step 6: Grinding the flash generated during g step 5 in order to obtain a grinded material;
- Step 7: Obtaining the grinded material
- Step 8: Mixing 1 to 90% by weight of said grinded material with 10 to 99% by weight of the material composition of step 4 based upon the total weight of the material composition;
- Step 9: Blow molding a part with the grinded material obtained at step 7;

According to a preferred embodiment of the invention, the steps 6 to 8 are repeated n time, n being superior or equal to 1.

According to a preferred embodiment of the invention, the steps 6 to 8 are repeated until the end of production.

During the blow molding process, a flash is generated together with the blow molded part (because the parison is generally much larger than the part itself). This flash should be integrated in the following blow molded part for cost reduction. Therefore, the flash is grinded in a shredder, in order to obtain a grinded material. Said grinded material is blended with the material composition of step 4 in the hopper of the blow molding machine, during the next generation of blow molded parts.

As the barrier composition content is calculated based on the total extruded mass or total mass extruded throughput, the total barrier composition content evolves from grinded material generation to grinded material generation. Thus, there is an accumulation of the barrier composition in the blow molding part. The total barrier composition content increases from grinded material generation to grinded material generation up to a steady state value.

For example, in the case of 80% by weight of grinded material and 5% by weight of barrier composition introduced at each generation, the total barrier composition at steady state is 25% by weight based on the total extruded mass or total mass extruded throughput.

In the proportion disclosed of the barrier composition and at 80% by weight of grinded material, the steady state is reached with n comprised between 16 to 26.

More advantageously, the blow molded part of the invention is composed of 50 to 90% by weight of a grinded material.

Preferably, the material composition of the present invention is prepared by dry blending the polyolefin and the barrier composition. Thus, the preparation of the material composition is simple.

In a particular embodiment, the material composition is prepared by dry-blending polyolefin granules (or powder) and barrier composition granules (or powder).

In a particular embodiment, the barrier composition is composed of a dry blending of granules of polyamide and granules of polyethylene grafted with maleic anhydride.

In a particular embodiment of the present invention, the polyolefin is dispersed in the form of nodules in the polyamide.

In a particular embodiment of the present invention, the at least one shell of the blow-molded part of a motor vehicle is composed of one single layer.

Advantageously, a simple machine comprising one extruder can be used.

The polyamide comprised in the barrier composition of the invention may be selected from the group consisting of polyamide-46 (PA46), polyamide-6 (PA6), polyamide-6,6 (PA6-6), polyamide-610 (PA610), polyamide-7 (PA7), polyamide-8 (PA8), polyamide-9 (PA9), polyamide-11 (PA11), polyamide-12 (PA12), polyamide-46 (PA46), MXD6, amorphous polyamide and the mixtures of at least two thereof.

Preferably, the polyamide is selected from the group consisting of polyamide-6 (PA6) and polyamide-6,6 (PA6-6) and their mixtures. For example, polyamide Technyl C548B gives good results.

The polyamide of the barrier composition of the invention comprises at least one layered clay.

Preferably, the content of said at least one layered clay is inferior to 1% by weight based upon the total weight of the material composition.

The layered clay is well dispersed in the polyamide. It enhances the barrier effect/property of the polyamide, in particular against alcohol contained in the fuel.

In an alternative embodiment, the layered clay is dispersed in the polyolefin.

In another particular embodiment, the layered clay is dispersed in the compatibilizer.

Preferably, the layered clay is one or more materials selected from montmorillonite, bentonite, kaolinite, mica, hectorite, fluorohectorite, saponite, beidelite, nontronite, stevensite, vermiculite, hallosite, volkonskoite, suconite, magadite, kenyalite and the mixture of at least two thereof.

The barrier composition according to the invention also comprises a compatibilizer, the content of which is from 10 to 60% by weight based upon the total weight of the barrier composition. Above 60% of the compatibilizer, the fuel barrier is degraded due to high permeability of the compatibilizer. Below 10% of the compatibilizer, the effect of the compatibilizer is not significant.

Generally, polyamide and polyolefin are not compatible. The addition of compatibilizer allows ensuring a good interface between the polyamide of the barrier composition and the polyolefin of the material composition. The polyamide is dispersed in the form of nodules in the polyolefin, the polyolefin being in the form of a continuous phase.

Preferably, the compatibilizer is selected from the group consisting of an ethylene-ethylene anhydride-acrylic acid copolymer, an ethylene-ethyl acrylate copolymer, an ethylene-alkyl acrylate-acrylic acid copolymer, a maleic anhydride modified (graft) high-density polyethylene, a maleic anhydride modified (graft) polyethylene, an ethylene-alkyl methacrylate-methacrylic acid copolymer, an ethylene-butyl acrylate copolymer, an ethylene-vinyl acetate copolymer, a maleic anhydride modified (graft) ethylene-vinyl acetate copolymer, and the mixture of at least two thereof.

In a particular embodiment, the barrier composition is prepared by dispersing homogeneously two kinds of granules:
- a first set of granules made of polyamide and comprising layered clay;
- a second set of granules made of compatibilizer (e.g. polyolefin grafted with maleic anhydride).

For example, the layered clay can be dispersed in polyamide either by solvent process or by melt blending process.

By definition a polyolefin is a polymer produced from an olefin or alkene as a monomer. Such polymer has good impact resistance property at low temperature.

The polyolefin comprised in the material composition of the invention may be selected from the group consisting of high-density polyethylene (HDPE), low-density polyethylene (LDPE), linear low-density polyethylene (LLDPE), an ethylene-propylene copolymer, metallocene polyethylene, polypropylene, and mixtures thereof.

The polypropylene may be selected from the group consisting of a homopolymer and a copolymer of propylene, metallocene polypropylene, and a composite resin, which is prepared by adding at least one additive selected from talc, flame retardants and the like to a homopolymer or copolymer of propylene to reinforce the physical properties of the polypropylene homopolymer or copolymer. Preferably, the polyolefin is a high-density polyethylene. For example, HDPE Lupolen 4261AG gives good results. Most preferably, the polyolefin is a high-density polyethylene with a melt flow index from 3 to 10 g/10min at 190°C under 21.6 kg.

Another aspect of the invention relates to a material composition for manufacturing a blow-molded part of a motor vehicle.

The material composition of the invention comprises polyolefin in the content from 94 to 99% by weight and barrier composition in the content from 1 to 6% by weight, based upon the total weight of the material composition.

Such material composition presents an excellent balance of properties such as fuel barrier properties, impact resistance performance and weldability.

Since the content of the barrier composition remains low, the material composition allows good welding quality.

Indeed, the polyolefin contributes to provide excellent impact resistance for the parts of the motor vehicle and the barrier composition contributes to provide excellent fuel barrier property.

The proportion of the barrier composition is advantageously from 1 to 6% by weight, based upon the total weight of the material composition. If the proportion of the barrier composition is less than 1% by weight, fuel barrier property is not satisfactorily enhanced, whereas if it exceeds 6% by weight, this disadvantageously incurs reduction in the impact resistance performance.

According to a preferred embodiment, the material composition for manufacturing a blow-molded part for a motor vehicle according to the invention comprises:
o a barrier material composition comprising :
   o a polyamide, the content of which is from 40 to 90% by weight based upon the total weight of the barrier material composition, said polyamide comprising at least a layered clay;
   ∘ A compatibilizer, the content of which is from 10 to 60% by weight based upon the total weight of the barrier material composition;
∘ a polyolefin, the content of which is from 94 to 99% by weight of the total weight of the material composition with the barrier material composition the content of which is from 1 to 6% by weight based upon the total weight of the material composition;
In a particular embodiment, a low amount of carbon black can be added. The content of carbon black in the blow molded part is around 0,5% by weight of the total weight of the material composition in order to ensure UV resistance. Another aspect of the invention relates to a blow molded part for a motor vehicle according to claim 10.

The present invention is described in greater detail below by referring to Example 1, but the present invention is not limited to this example.

### Example 1

The specimens were produced by dry-blending HDPE-Lupolen 6241AG granules and barrier composition granules comprising PA-6 in a blow molding machine having a single blowing screw.

The specimens were blow molded according to the following conditions:
- Drying time: 90°C overnight (prior to blow molding)
- Temperature range from hopper to die (°C): 200-260
- Screw speed range: 35-45 RPM (screw Rotation Per Minute)
- Blowing time: 83s
- Cycle time: 88 s
- Material pressure range in the screw: 220-260bar
- Mold temperature: 10°C

Impact resistance and fuel barrier properties of the specimens were evaluated. The results obtained are shown in the following Table 1.

### ∘ Fuel permeability test:

The test fuel used for the permeability test is fuel CE10. CE10 is a mixture of 45% of isooctane, 45% of toluene and 10% of ethanol. The specimens are blow molded bottles of a capacity of one liter.

Samples are tested in liquid phase and gas phase.

Bottles of one liter are filled with fuel CE10, hermetically sealed and stored at temperature of 40 °C.

During the test period of 20 weeks, the loss of weight due to diffusion during the test period is determined.

### ∘ Impact tests:

### ∘ ECE34 tests:

The test is performed on specimens comprising the material composition of the invention. The specimens are blow molded bottles of a capacity of one liter. Their weight is about 160 g.

Prior to the test, one liter bottles are filled to 100 per cent of theirs capacities with a mixture of water and ethylene glycol. The one liter bottles were conditioned at a temperature of -40 °C during 16 hours in a cold room.

The test consists in pendulum impact on the one liter bottles. The impact energy was 30J.

After the pendulum impact test, the one liter bottles are examined in order to check the presence of leakage. No leakage is admissible.

### ∘ Multiaxial impact tests:

Another method for measuring impact resistance of the material composition according to the present invention was as follows.

Specimens having a thickness of about 2,7 mm were used and evaluated by a multi-axial impact tester at temperature of -40°C according to ISO6603. In particular, specimens were conditioned at -40°C during 16 hours in a cold chamber before the test. Then specimens were placed into the test chamber. The temperature of the test chamber was regulated at -40°C by using liquid nitrogen. The support of the specimen has a 40mm diameter. The dart was hemispheric and has a 20mm diameter. The specimen was maintained (locked) by compression between an actuator and the top wall of the test chamber, in order to prevent it from moving or vibrating during the test. The force-displacement curve was recorded for each specimen. The impact energy was obtained by integrating this curve. The impact energy was 207J (20.7kg mass falling from 1m). The speed of the dart at impact was ±4.43m/s.

The energy absorbed during impact is recorded. A ratio energy / thickness is determined.

Previous results showed that if the specimens presents a ratio equal to or above 20J/mm, that means that the test requirement ECE 34 should be successfully meet.

**Table 1**

| **Polyolefin (HDPE)** | **% by weight** | 100 | 99 | 98 | 97^{b} | 96 | 92 | 88 | 84 | 80 |
|---|---|---|---|---|---|---|---|---|---|---|
| **Barrier composition** | **% by weight** | 0 | 1 | 2 | 3^{b} | 4 | 8 | 12 | 16 | 20 |
| **Fuel permeability** | **g.mm /(m².d)** | 60 | 40.8 | 27.7 | nd | 16.9 | 9 | nd | 0.5 | <0.4 |
| **Impact resistance** | **ECE34 test** | No leak | No leak | No leak | No leak | No leak | No leak | nd | nd | nd |
| | **J/mm** | nd | nd | nd | nd | nd | nd | 5.7 | nd | 2.5 |

| | | | | | | | | | | |
|---|---|---|---|---|---|---|---|---|---|---|
| Nd: non disclosed ^{b} : this particular composition includes 80 % of grinded material of the present invention. 6 generations of grinded material have been produced. | | | | | | | | | | |

## Claims

1. A method for manufacturing a blow-molded part for a motor vehicle, said part comprising at least one shell, said at least one shell being composed of one single layer made of a barrier material composition, the process comprising the following steps:
- Step 1: preparing the barrier material composition, said barrier composition comprising:
∘ A polyamide the content of which is from 40 to 90% by weight based upon the total weight of the barrier material composition, said polyamide comprising at least a layered clay;
∘ A compatibilizer the content of which is from 10 to 60% by weight based upon the total weight of the barrier material composition;
- Step 2: Obtaining the barrier material composition;
- Step 3: Preparing a material composition by mixing a polyolefin the content of which is from 94 to 99% by weight based upon the total weight of the material composition with the barrier material composition obtained at step 2 the content of which is from 1 to 6% by weight based upon the total weight of the material composition;
- Step 4: Obtaining the material composition;
- Step 5: Blow molding a part for a motor vehicle with the material composition obtained at step 4, said part comprising a flash.

2. Method according to claim 1, wherein the method comprises the following additional steps:
- Step 6: Grinding the flash generated during step 5 in order to obtain a grinded material;
- Step 7: Obtaining the grinded material;
- Step 8: Mixing 1 to 90% by weight of said grinded material with 10 to 99% by weight of the material composition of step 4 based upon the total weight of the material composition;
- Step 9: Blow molding a part with the grinded material obtained at step 7; wherein the steps 6 to 8 are repeated n time, n being superior or equal to 1.

3. Method according to claim 2, wherein the steps 6 to 8 are repeated until end of production.

4. Method according to any one of claim 2 to 3, wherein the blow-molded part is composed of 50 to 90% by weight of the grinded material obtained at step 7.

5. Method according to any one of the previous claims, wherein the mixing steps (3, 8) are performed by dry blending.

6. Method according to any one of the previous claims, wherein the layered clay is selected from the group consisting of montmorillonite, bentonite, kaolinite, mica, hectorite, fluorohectorite, saponite, beidelite, nontronite, stevensite, vermiculite, hallosite, volkonskoite, suconite, magadite, kenyalite and the mixture of at least two thereof, and/ or
the compatibilizer is selected from the group consisting of an ethylene-ethylene anhydride-acrylic acid copolymer, an ethylene-ethyl acrylate copolymer, an ethylene-alkyl acrylate-acrylic acid copolymer, a maleic anhydride modified (graft) high-density polyethylene, a maleic anhydride modified (graft) polyethylene, an ethylene-alkyl methacrylate-methacrylic acid copolymer, an ethylene-butyl acrylate copolymer, an ethylene-vinyl acetate copolymer, a maleic anhydride modified (graft) ethylene-vinyl acetate copolymer, and the mixture of at least two thereof.

7. Method according to any one of the previous claims, wherein the polyolefin is a high-density polyethylene.

8. Method according to claim 7, wherein the fresh polyolefin is a high-density polyethylene with a melt flow index from 3 to 10 g/10min at 190°C under 21.6 kg.

9. Method according to any one of the previous claims, wherein the polyamide is selected from the group consisting of polyamide-6, polyamide-6,6 and their mixtures.

10. A part for a motor vehicle obtainable by the method according to any one of claims 1 to 9, wherein said part is a fuel filler pipe and/ or a fuel tank, said part comprising at least one shell composed of one single layer.

## Patentansprüche

1. Verfahren zur Herstellung eines blasgeformten Teils für ein Kraftfahrzeug, wobei das Teil mindestens eine Schale umfasst, wobei die mindestens eine Schale aus einer einzigen Schicht zusammengesetzt ist, die aus einer Barrierematerialzusammensetzung gebildet ist, wobei der Prozess die folgenden Schritte umfasst:
- Schritt 1: Bilden der Barrierematerialzusammensetzung, wobei die Barrierematerialzusammensetzung umfasst:
∘ ein Polyamid, dessen Gehalt 40 bis 90 Gew.-%, bezogen auf das Gesamtgewicht der Barrierematerialzusammensetzung, beträgt, wobei das Polyamid mindestens einen geschichteten Ton umfasst;
∘ ein Kompatibilisierungsmittel, dessen Gehalt zwischen 10 und 60 Gew.-%, bezogen auf das Gesamtgewicht der Barrierematerialzusammensetzung, beträgt;
- Schritt 2: Erhalten der Barrierematerialzusammensetzung;
- Schritt 3: Bilden einer Materialzusammensetzung durch Mischen eines Polyolefins, dessen Gehalt von 94 bis 99 Gew.-%, bezogen auf das Gesamtgewicht der Materialzusammensetzung, beträgt, mit der in Schritt 2 erhaltenen Barrierematerialzusammensetzung, deren Gehalt von 1 bis 6 Gew.-%, bezogen auf das Gesamtgewicht der Materialzusammensetzung, beträgt;
- Schritt 4: Erhalten der Materialzusammensetzung;
- Schritt 5: Blasformen eines Teils für ein Kraftfahrzeug mit der in Schritt 4 erhaltenen Materialzusammensetzung, wobei das Teil einen Grat aufweist.

2. Verfahren nach Anspruch 1, wobei das Verfahren die folgenden zusätzlichen Schritte umfasst:
- Schritt 6: Schleifen des in Schritt 5 erzeugten Grates, um ein geschliffenes Material zu erhalten;
- Schritt 7: Erhalten des geschliffenen Materials;
- Schritt 8: Mischen von 1 bis 90 Gew.-% des geschliffenen Materials mit 10 bis 99 Gew.-% der Materialzusammensetzung aus Schritt 4, bezogen auf das Gesamtgewicht der Materialzusammensetzung;
- Schritt 9: Blasformen eines Teils mit dem in Schritt 7 erhaltenen geschliffenen Material;
wobei die Schritte 6 bis 8 n-mal wiederholt werden, wobei n mindestens 1 ist.

3. Verfahren nach Anspruch 2, wobei die Schritte 6 bis 8 bis zum Ende der Produktion wiederholt werden.

4. Verfahren nach einem der Ansprüche 2 und 3, wobei das blasgeformte Teil aus 50 bis 90 Gew.-% des in Schritt 7 erhaltenen geschliffenen Materials zusammengesetzt ist.

5. Verfahren nach einem der vorangehenden Ansprüche, wobei die Mischschritte (3, 8) durch Trockenmischen durchgeführt werden.

6. Verfahren nach einem der vorangehenden Ansprüche, wobei der geschichtete Ton aus der Gruppe ausgewählt ist bestehend aus Montmorillonit, Bentonit, Kaolinit, Glimmer, Hectorit, Fluorhectorit, Saponit, Beidelit, Nontronit, Stevensit, Vermiculit, Hallosit, Volkonskoit, Suconit, Magadit, Kenyalit und dem Gemisch von mindestens zwei davon und/oder das Kompatibilisierungsmittel aus der Gruppe ausgewählt ist, bestehend aus einem Ethylen-Ethylenanhydrid-Acrylsäure-Copolymer, einem Ethylen-Ethylacrylat-Copolymer, einem Ethylen-Alkylacrylat-Acrylsäure-Copolymer, einem mit Maleinsäureanhydrid modifizierten (Pfropf-) Polyethylen hoher Dichte, einem mit Maleinsäureanhydrid modifizierten (Pfropf-) Polyethylen, einem Ethylen-Alkylmethacrylat-Methacrylsäure-Copolymer, einem Ethylen-Butylacrylat-Copolymer, einem Ethylen-Vinylacetat-Copolymer, einem mit Maleinsäureanhydrid modifizierten (Pfropf-) Ethylen-Vinylacetat-Copolymer und dem Gemisch von mindestens zwei davon.

7. Verfahren nach einem der vorangehenden Ansprüche, wobei das Polyolefin ein Polyethylen hoher Dichte ist.

8. Verfahren nach Anspruch 7, wobei das frische Polyolefin ein Polyethylen hoher Dichte mit einem Schmelzindex von 3 bis 10 g/10 min bei 190 °C unter 21,6 kg ist.

9. Verfahren nach einem der vorangehenden Ansprüche, wobei das Polyamid aus der Gruppe ausgewählt ist bestehend aus Polyamid-6, Polyamid-6,6 und deren Gemischen.

10. Teil für ein Kraftfahrzeug, das durch das Verfahren nach einem der Ansprüche 1 bis 9 erhalten werden kann, wobei das Teil ein Kraftstoffeinfüllrohr und/oder ein Kraftstofftank ist, wobei das Teil mindestens eine Schale umfasst, die aus einer einzigen Schicht zusammengesetzt ist.

## Revendications

1. Procédé de fabrication d'une pièce moulée par soufflage pour un véhicule à moteur, ladite pièce comprenant au moins une coque, ladite au moins une coque étant composée d'une seule couche faite d'une composition de matériau barrière, le procédé comprenant les étapes suivantes :
- Etape 1 : préparation de la composition de matériau barrière, ladite composition barrière comprenant :
∘ Un polyamide dont la teneur est de 40 à 90% en poids par rapport au poids total de la composition de matériau barrière, ledit polyamide comprenant au moins une argile stratifiée ;
∘ Un compatibilisant dont la teneur est de 10 à 60% en poids par rapport au poids total de la composition de matériau barrière ;
- Étape 2 : obtention de la composition du matériau barrière ;
- Etape 3 : Préparation d'une composition de matériau en mélangeant une polyoléfine dont la teneur est de 94 à 99% en poids par rapport au poids total de la composition de matériau avec la composition de matériau barrière obtenue à l'étape 2 dont la teneur est de 1 à 6% en poids par rapport au poids total de la composition de matériau ;
- Étape 4 : Obtention de la composition de matériau ;
- Etape 5 : Moulage par soufflage d'une pièce pour un véhicule à moteur avec la composition de matériau obtenue à l'étape 4, ladite pièce comprenant un flash.

2. Procédé selon la revendication 1, dans lequel le procédé comprend les étapes supplémentaires suivantes :
- Étape 6 : Broyage des flash générés à l'étape 5 afin d'obtenir un matériau broyé ;
- Étape 7 : Obtention du matériau broyé ;
- Etape 8 : Mélange de 1 à 90% en poids dudit matériau broyé avec 10 à 99% en poids de la composition de matériau de l'étape 4, par rapport au poids total de la composition de matériau ;
- Étape 9 : moulage par soufflage d'une pièce avec le matériau broyé obtenu à l'étape 7 ;
dans laquelle les étapes 6 à 8 sont répétées n fois, n étant supérieur ou égal à 1.

3. Procédé selon la revendication 2, dans lequel les étapes 6 à 8 sont répétées jusqu'à la fin de la production.

4. Procédé selon l'une quelconque des revendications 2 à 3, dans lequel la pièce moulée par soufflage est composée de 50 à 90% en poids de la matière broyée obtenue à l'étape 7.

5. Procédé selon l'une quelconque des revendications précédentes, dans lequel les étapes de mélange (3, 8) sont réalisées par mélange à sec.

6. Procédé selon l'une quelconque des revendications précédentes, dans lequel l'argile stratifiée est choisie dans le groupe constitué par la montmorillonite, la bentonite, la kaolinite, le mica, l'hectorite, la fluorohectorite, la saponite, la beidelite, la nontronite, la stevensite, la vermiculite, l'hallosite, la volkonskoite, la suconite, la magadite, la kenyalite et le mélange d'au moins deux d'entre elles, et/ou
le compatibilisant est choisi dans le groupe constitué par un copolymère éthylène-anhydride d'éthylène-acide acrylique, un copolymère éthylène-acrylate d'éthyle, un copolymère éthylène-acrylate d'alkyle-acide acrylique, un polyéthylène haute densité modifié par l'anhydride maléique (greffé), un polyéthylène (greffé) modifié par l'anhydride maléique, un copolymère éthylène-méthacrylate d'alkyle-acide méthacrylique, un copolymère éthylène-acrylate de butyle, un copolymère éthylène-acétate de vinyle, un copolymère éthylène-acétate de vinyle (greffé) modifié par l'anhydride maléique, et le mélange d'au moins deux d'entre eux.

7. Procédé selon l'une quelconque des revendications précédentes, dans lequel la polyoléfine est un polyéthylène haute densité.

8. Procédé selon la revendication 7, dans lequel la polyoléfine fraîche est un polyéthylène haute densité avec un indice de fluidité de 3 à 10 g/10min à 190°C sous 21,6 kg.

9. Procédé selon l'une quelconque des revendications précédentes, dans lequel le polyamide est choisi dans le groupe constitué par le polyamide-6, le polyamide-6,6 et leurs mélanges.

10. Pièce pour un véhicule à moteur pouvant être obtenue par le procédé selon l'une quelconque des revendications 1 à 9, dans laquelle ladite pièce est une tubulure de remplissage de carburant et/ou un réservoir de carburant, ladite pièce comprenant au moins une coque composée d'une seule couche.
